# EUROPEAN PATENT APPLICATION

(11) **EP 2 474 859 A1**
(43) Date of publication of application: **11.07.2012**
(21) Application number: 10811607.0
(22) Date of filing: 02.07.2010
(51) Int. Cl.: G02F 1/1345, G02F 1/13, G02F 1/1333, G09F 9/00

(54) **METHOD FOR ELIMINATING STATIC ELECTRICITY FROM LIQUID CRYSTAL MODULE, METHOD FOR MANUFACTURING LIQUID CRYSTAL DISPLAY DEVICE, AND LIQUID CRYSTAL MODULE**

(30) Priority: 31.08.2009 JP 2009199854
(71) Applicant: Sharp Kabushiki Kaisha, Osaka-shi, Osaka 545-8522 (JP)
(72) Inventor: YANO, Seiji, Osaka-shi, Osaka 545-8522 (JP)
(74) Representative: Müller-Boré & Partner Patentanwälte
(86) International application number: PCT/JP2010/061315
(87) International publication number: WO 2011/024556

(57) **Abstract**

To provide a method for removing static electricity of a liquid crystal module by which semiconductor elements of liquid crystal drivers can be prevented from being broken by static electricity when a protection film is detached. The method for removing static electricity of a liquid crystal module (1) that includes a liquid crystal display panel (2), a protection film (3) that is disposed in a detachable manner on a surface of the liquid crystal display panel, a printed circuit board (5), a semiconductor element (41) and a liquid crystal driver (4), and includes the step of grounding a wire (46) at an output side of the liquid crystal driver when the protection film is detached from the liquid crystal display panel.

## Description

### Technical Field

The present invention relates to a method for removing static electricity of a liquid crystal module including a liquid crystal display panel covered with a detachable protection film, and a method for producing a liquid crystal display device, and a liquid crystal module.

### Background Art

A liquid crystal display device includes a liquid crystal display panel that functions as an image display surface. The liquid crystal display panel generally includes a liquid crystal cell defining a pair of glass substrates sandwiching liquid crystals, and a pair of polarizing plates sandwiching the liquid crystal cell. The polarizing plates are disposed at the outermost positions in the liquid crystal display panel, so that they could be scratched during a production process of the liquid crystal display device. Thus, protection films are usually placed on the outer surfaces of the polarizing plates.

The protection films are not left in the end product, and detached from the surfaces of the polarizing plates of the liquid crystal display panel appropriately during the production process of the liquid crystal display device. General resin films are used as the protection films.

It is known that when those protection films are detached from the surfaces of the polarizing plates, static electricity develops as described in PTL1, which has an adverse affect on switching elements and other constitution elements of the liquid crystal display panel. PTL1 relates to a method for removing static electricity of a liquid crystal module that includes a liquid crystal display panel, liquid crystal drivers connected to the liquid crystal display panel, printed circuit boards connected to the liquid crystal drivers, and FPCs (Flexible Printed Circuits). Disclosed by PTL1 is a method such that when the protection films are detached from the surfaces of the liquid crystal display panel (the polarizing plates), one end of each FPC is placed in a water bath and grounded via the water in the water bath.

### Citation List

### Patent Literature

PTL 1: JP2007-65487 A

### Summary of Invention

### Technical problem

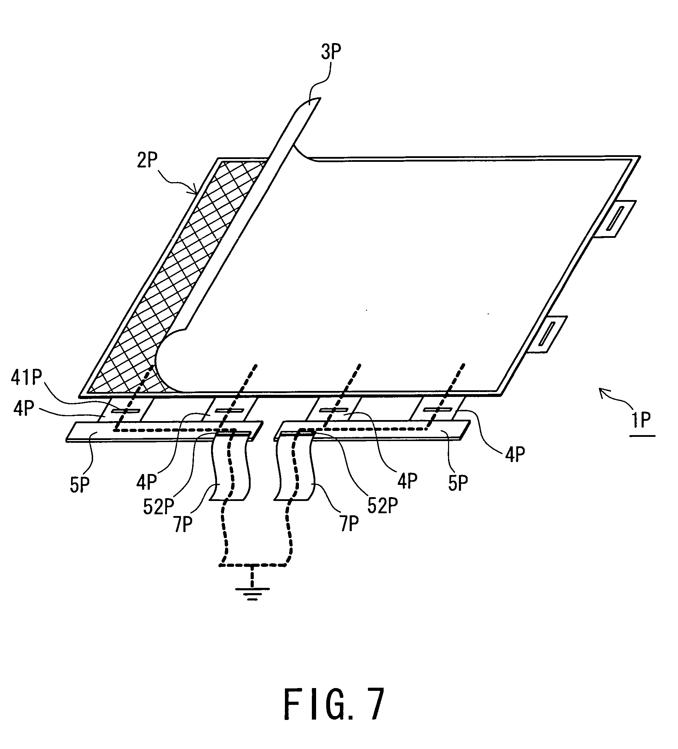

Fig. 7 is a schematic view for illustrating a conventional method for removing static electricity of a liquid crystal module as disclosed in PTL1. A liquid crystal module 1P is shown in Fig. 7, which includes a liquid crystal display panel 2P that is covered with a detachable protection film 3P, liquid crystal drivers 4P connected to the liquid crystal display panel 2P, and printed circuit boards 5P connected to the liquid crystal drivers 4P. The liquid crystal drivers 4P include semiconductor elements 41P. FPCs 7P are connected to connectors 52P of the printed circuit boards 5P. In the method for removing static electricity shown in Fig. 7, the FPCs 7P are used to be grounded. The broken lines in Fig. 7 schematically indicate places where static electricity flows in the liquid crystal module 1P.

In the conventional method for removing static electricity, static electricity flows from the liquid crystal display panel 2P toward the printed circuit boards 5P through the liquid crystal drivers 4P as shown in Fig. 7. Thus, if the static electricity is large in amount, the semiconductor elements 41P of the liquid crystal drivers 4P could be broken. For this reason, a method for removing static electricity is desired, by which the semiconductor elements 41P of the liquid crystal drivers 4P can be protected in a convincing way from static electricity when the protection film 3P is detached.

In addition, because the FPCs 7P used in the conventional method for removing static electricity are used exclusively for being grounded. Thus, every time static electricity removal is performed, the FPCs 7P need to be attached to and detached from the connectors 52P of the printed circuit boards 5P. The connectors 52P of the printed circuit boards 5P could be sometimes deteriorated by the attachment and detachment of the FPCs 7P. For this reason, a method for removing static electricity is desired, by which the connectors 52P of the printed circuit boards 5P can be prevented from being deteriorated.

In order to overcome the problems described above, one object of the present invention is to provide a method for removing static electricity of a liquid crystal module by which semiconductor elements of liquid crystal drivers can be prevented from being broken by static electricity when a protection film is detached from a surface of a liquid crystal display panel.

Another object of the present invention is to provide a method for producing a liquid crystal display device, which includes a step of a method (process) for removing static electricity of a liquid crystal module by which semiconductor elements of liquid crystal drivers can be prevented from being broken by static electricity when a protection film is detached from a surface of a liquid crystal display panel.

Another object of the present invention is to provide a liquid crystal module that can be used in the method for removing static electricity of a liquid crystal module, and the method for producing a liquid crystal display device.

### Solution to Problem

A method for removing static electricity of a liquid crystal module of the present invention is as follows.
<1> A method for removing static electricity of a liquid crystal module that includes a liquid crystal display panel including a panel terminal, a protection film that is disposed in a detachable manner on a surface of the liquid crystal display panel, a printed circuit board including a data output terminal, and a liquid crystal driver including a semiconductor element including an input terminal and an output terminal, an insulating film substrate on which the semiconductor element is disposed, a wire at an input side that is disposed on the insulating film substrate, one end of the wire being connected to the data output terminal and the other end being connected to the input terminal of the semiconductor terminal, and a wire at an output side that is disposed on the insulating film substrate, one end of the wire being connected to the output terminal of the semiconductor terminal and the other end being connected to the panel terminal, includes the step of grounding the wire at the output side when the protection film is detached from the liquid crystal display panel.

<2> It is preferable that the wire at the output side includes an earth pad member disposed in a midway of the wire.

<3> It is preferable that in the method of <1> or <2>, the liquid crystal driver further includes a solder resist layer that covers the wires on the insulating film substrate, the solder resist layer including an opening portion through which the wire at the output side is exposed.

<4> It is preferable that in the method of any one of <1> to <3>, the liquid crystal driver includes a plurality of liquid crystal drivers, and the method includes the step of grounding all the wires at the output sides of the liquid crystal drivers when the protection film is detached from the liquid crystal display panel.

<5> It is preferable that in the method of any one of <1> to <4>, the liquid crystal driver defines a source driver.

<6> It is preferable that in the method of any one of <1> to <5>, the protection film is disposed on a polarizing plate that the liquid crystal display panel includes.

A method for producing a liquid crystal display device of the present invention is as follows.
<7> A method for producing a liquid crystal display device includes the step of detaching a protection film from a liquid crystal display panel of a liquid crystal module that includes the liquid crystal display panel including a panel terminal, the protection film that is disposed in a detachable manner on a surface of the liquid crystal display panel, a printed circuit board including a data output terminal, and a liquid crystal driver including a semiconductor element including an input terminal and an output terminal, an insulating film substrate on which the semiconductor element is disposed, a wire at an input side that is disposed on the insulating film substrate, one end of the wire being connected to the data output terminal and the other end being connected to the input terminal of the semiconductor terminal, and a wire at an output side that is disposed on the insulating film substrate, one end of the wire being connected to the output terminal of the semiconductor terminal and the other end being connected to the panel terminal, wherein in the step of detaching the protection film, the wire at the output side is grounded.

<8> It is preferable that in the method of <7>, the wire at the output side includes an earth pad member disposed in a midway of the wire.

<9> It is preferable that in the method of <7> or <8>, the liquid crystal driver includes a solder resist layer that covers the wires on the insulating film substrate, the solder resist layer including an opening portion through which the wire at the output side is exposed.

<10> It is preferable that in the method of <7> to <9>, the liquid crystal driver includes a plurality of liquid crystal drivers, and the method includes the step of grounding all the wires at the output sides of the liquid crystal drivers when the protection film is detached from the liquid crystal display panel.

<11> It is preferable that in method of <7> to <10>, the liquid crystal driver defines a source driver.

<12> It is preferable that in method of <7> to <11>, the protection film is disposed on a polarizing plate that the liquid crystal display panel includes.

A liquid crystal module of the present invention is as follows.
<13> A liquid crystal module includes a liquid crystal display panel including a panel terminal, a protection film that is disposed in a detachable manner on a surface of the liquid crystal display panel, a printed circuit board including a data output terminal, and a liquid crystal driver including a semiconductor element including an input terminal and an output terminal, an insulating film substrate on which the semiconductor element is disposed, a wire at an input side that is disposed on the insulating film substrate, one end of the wire being connected to the data output terminal and the other end being connected to the input terminal of the semiconductor terminal, and a wire at an output side that is disposed on the insulating film substrate, one end of the wire being connected to the output terminal of the semiconductor terminal and the other end being connected to the panel terminal, wherein in the step of detaching the protection film, the wire at the output side is grounded.

<14> It is preferable that in the liquid crystal module of <13>, the wire at the output side that is exposed through the opening portion includes an earth pad member.

### Advantageous Effects of Invention

The method for removing static electricity of the liquid crystal module of the preferred embodiments of the present invention can prevent the semiconductor element of the liquid crystal driver from being broken by static electricity when the protection film is detached from the surface of the liquid crystal display panel.

In addition, the method for producing the liquid crystal display device of the preferred embodiments of the present invention allows the liquid crystal display device to be produced, which includes the liquid crystal module in which the semiconductor element of the liquid crystal driver can be prevented from being broken by static electricity when the protection film is detached from the surface of the liquid crystal display panel.

In addition, the liquid crystal module of the preferred embodiments of the present invention can be used in the method for removing static electricity of the liquid crystal module, and the method for producing the liquid crystal display device.

### Brief Description of Drawings

Fig. 1 is a schematic view for illustrating a method for removing static electricity of a liquid crystal module of one preferred embodiment of the present invention.
Fig. 2 is a plan view showing a liquid crystal driver.
Fig. 3 is a cross-sectional view schematically showing the liquid crystal module 1 along the line A-A' of Fig. 1.
Fig. 4 is a schematic view for illustrating a method for removing static electricity of a liquid crystal module with the use of a static electricity removal device.
Fig. 5 is a perspective view showing a static electricity removal device.
Fig. 6 is a plan view showing a liquid crystal driver of another preferred embodiment of the present invention.
Fig. 7 is a schematic view for illustrating a conventional method for removing static electricity of a liquid crystal module.

### Description of Embodiments

Detailed descriptions of preferred embodiments of a liquid crystal module of the present invention, a method for removing static electricity of a liquid crystal module of the present invention, and a method for producing a liquid crystal display device of the present invention. The present invention is not limited to the preferred embodiments described in the present specification.

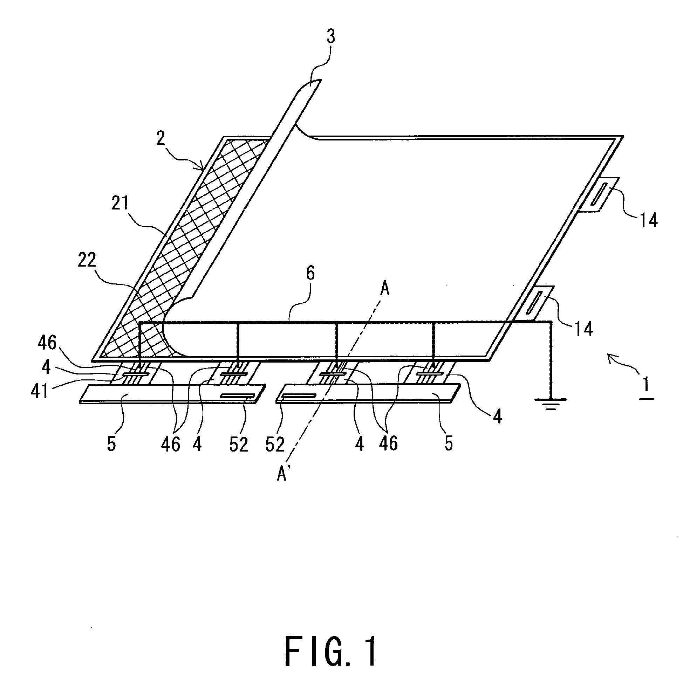

Fig. 1 is a schematic view for illustrating a method for removing static electricity of a liquid crystal module of one of the preferred embodiments of the present invention. First of all, a liquid crystal module 1 that is used in the method for removing static electricity of the liquid crystal module will be explained.

### <Liquid Crystal Module>

As shown in Fig. 1, the liquid crystal module 1 includes a liquid crystal display panel 2, a protection film 3, liquid crystal drivers 4 and printed circuit boards 5.

The liquid crystal display panel 2 defines lamination layers including a liquid crystal cell defining a pair of glass substrates sandwiching liquid crystals, and a pair of polarizing plates sandwiching the liquid crystal cell. Spacers are provided between the glass substrates of the liquid crystal cell, which provide a given space (cell gap) between the glass substrates. One of the paired glass substrates is a TFT (Thin Film Transistor) array substrate and the other one is a CF (Color Filter) substrate.

The TFT array substrate includes a transparent glass plate on which a plurality of TFTs (switching elements) and a plurality of pixel electrodes are arrange in a matrix. Source bus lines and gate bus lines are arranged perpendicular to each other so as to section the TFTs and the pixel electrodes on the transparent glass plate. That is, the source bus lines and gate bus lines are arranged in a lattice pattern. The TFTS are connected to the source bus lines and gate bus lines. The TFT array substrate includes panel terminals (input terminals) to which the bus lines are connected, the panel terminals being disposed at one side end of the TFT array substrate.

The CF substrate includes a transparent glass plate on which CF layers of R(red), G(green) and B(blue), and a common electrode are layered.

The liquid crystals have optical properties that are changed by voltage applied between the TFT array substrate and the CF substrate. The liquid crystal display panel 2 includes also optical films such as alignment film and a phase plate.

The liquid crystal display panel 2 shown in Fig. 1 includes one of polarizing plates 22 that is disposed at the uppermost position in the liquid crystal display panel 2. The polarizing plate 22 is layered on the side of the TFT array substrate 21 of the paired glass substrates. The protection film 3 is placed on a surface of the polarizing plate 22. The protection film 3 is attached in a detachable manner to the surface of the polarizing plate 22. A protection film is attached to a surface of the other polarizing plate (not shown) (i.e., a surface of the polarizing plate on the back side). The protection film 3 is made from a known resin film such as polyethylene terephthalate.

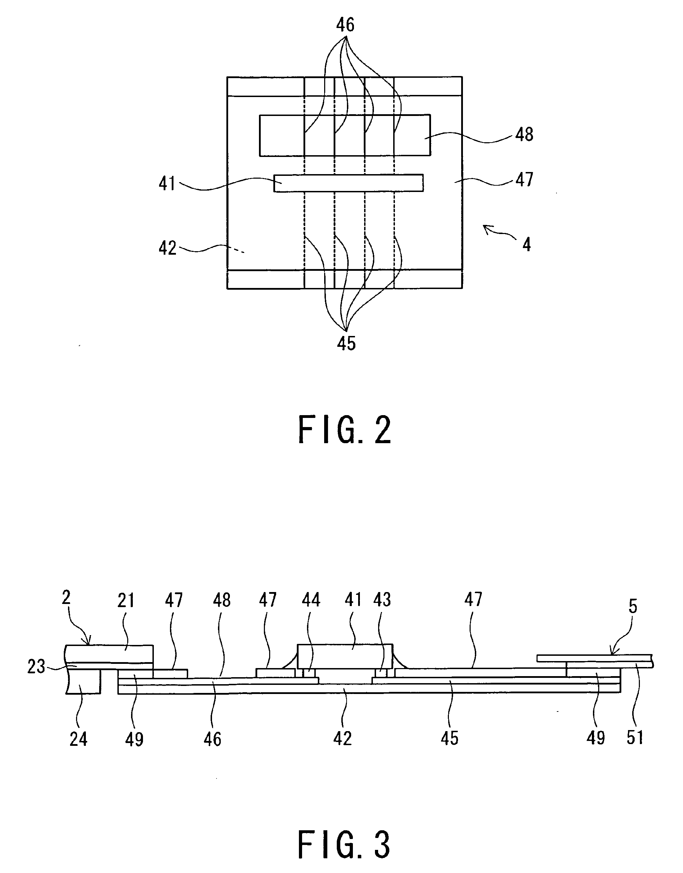

The liquid crystal drivers 4 are connected to one side end of the liquid crystal display panel 2 that has a square shape. In the present embodiments, the four liquid crystal drivers 4 are connected to the one side end of the liquid crystal display panel 2. The number of liquid crystal drivers 4 provided to the liquid crystal display panel 2 is decided appropriately for an intended purpose. The liquid crystal drivers 4 define so-called source drivers, and are arranged to supply signals to source electrodes of the TFTs that are each provided to pixels of the liquid crystal display panel 2. Fig. 2 is a plan view showing one of the liquid crystal drivers 4. Fig. 3 is a cross-sectional view schematically showing the liquid crystal module 1 along the line A-A' of Fig. 1.

Each of the liquid crystal drivers 4 includes a semiconductor element 41, and a flexible insulating film substrate 42 on which the semiconductor element 41 is disposed, as shown in Figs. 2 and 3. Each semiconductor element 41 includes an input terminal 43 and an output terminal 44 as shown in Fig. 3. Wires 45 at an input side are provided on the insulating film substrate 42, where one ends of the wires 45 are connected to the input terminal 43 of each semiconductor terminal 41 as shown in Figs. 2 and 3. In addition, wires 46 at an output side are provided on the insulating film substrate 42, where one ends of the wires 46 are connected to the output terminal 44 of each semiconductor terminal 41. The wires 46 are disposed on the side of the liquid crystal display panel 2. The four wires 45 and the four wires 46 are shown in Fig. 2 for the sake of illustration. The wires 45 and the wires 46 are made from a known material such as copper.

The surfaces of the wires 45 and 46 are covered with a solder resist layer 47. To be specific, the wires 45 and 46 are sandwiched between the insulating film substrate 42 and the solder resist layer 47. The solder resist layer 47 covering the wires 46 includes an opening portion 48 through which midway portions of the wires 46 are exposed.

The other ends of the wires 45 are exposed from the solder resist layer 47. The other ends of the wires 45 are connected to a terminal (a data output terminal 51) of each printed circuit board 5 via an anisotropic conductive film (ACF) 49.

The other ends of the wires 46 are exposed from the solder resist layer 47. The other ends of the wires 46 are connected to the panel terminals 23 disposed at the one side end of the TFT array substrate 21 of the liquid crystal display panel 2 via an anisotropic conductive film (ACF) 49. The panel terminals 23 are disposed on the side facing the CF substrate 24 (on the inner side).

TCPs (Tape Carrier Package), COFs (Chip on Film) or SOFs (System on Film) are preferably used for the liquid crystal drivers 4.

The printed circuit boards 5 define so-called source substrates, and are provided two as shown in Fig. 1 on the side opposed to the liquid crystal drivers 4 and the liquid crystal display panel 2. Each printed circuit board 5 is connected to two liquid crystal drivers 4. The printed circuit boards 5 each include connectors 52 into which FPCs to be connected to external circuits are to be inserted. Each of the FPCs includes a pair of films having an insulating property and flexibility, and a plurality of wires disposed parallel to each other, where the wires are sandwiched between the films.

Electric signals and an electric source required for image display of the liquid crystal display panel 2 are supplied from the external circuits to the liquid crystal drivers 4 via the wires on the FPCs and the printed circuit boards 5.

The liquid crystal module 1 includes liquid crystal drivers 14 in addition to the liquid crystal drivers 4. The liquid crystal drivers 14 define so-called gate drivers, and are arranged to supply signals to gate electrodes of the TFTs that are each provided to the pixels of the liquid crystal display panel 2. Electric signals and an electric source sent to the liquid crystal drivers 14 are supplied from the external circuits via the printed circuit boards (source substrates) 5 and the liquid crystal drivers (source drivers) 4. The liquid crystal drivers 4 include wires (so-called through wires, not shown) for supplying the electric signals and electric source sent to the liquid crystal drivers (gate driers) 14 in addition to the wires 45 and 46.

The protection film 3 is detached from the surface of the liquid crystal display panel 2 of the liquid crystal module 1 in a step included in the process for producing a liquid crystal display device. The step (step of detaching the protection film) is preferably performed before members that make up the liquid crystal display device such as a bezel and a frame are assembled with the liquid crystal module 1. During this step, static electricity of the liquid crystal module 1 is removed. Hereinafter, a method for removing static electricity of a liquid crystal module will be explained with reference to Figs. 1 to 5.

### <Method for Removing Static Electricity of Liquid Crystal Module>

All the wires 46 at the output side of the liquid crystal drivers 4 of the liquid crystal module 1 are grounded and electrically connected to a ground lead 6 in the method for removing static electricity of the liquid crystal module as shown in Fig. 1. The ground lead 6 is connected to each of the wires 46 of the liquid crystal drivers 4 before the protection film 3 is detached from the surface of the liquid crystal display panel 2. The ground lead 6 is thus connected to all the liquid crystal drivers 4. In addition, the ground lead 6 is connected to all of the wires 46 of each liquid crystal driver 4. The ground lead 6 is connected to the wires 46 that are exposed through the opening portions 48 of the liquid crystal drivers 4 as shown in Figs. 2 and 3.

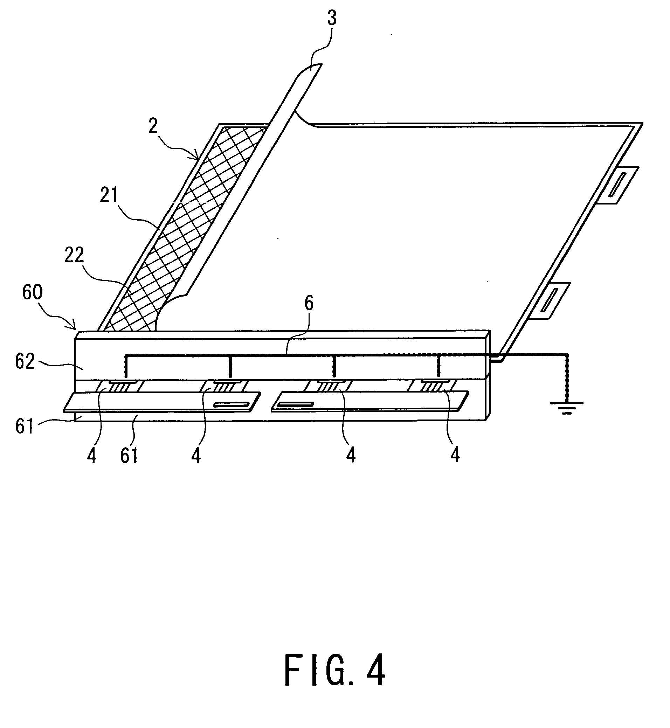

Fig. 4 is a schematic view for illustrating the method for removing static electricity of the liquid crystal module with the use of a static electricity removal device. The liquid crystal drivers 4 of the liquid crystal module 1 are grounded preferably with the use of a static electricity removal device 60 as shown in Fig. 4. The static electricity removal device 60 includes a base 61 to be disposed under the liquid crystal drivers 4, and a pushing member 62 that is arranged to push the liquid crystal drivers 4 disposed on the base 61 from the above and is in electrically contact with the wires 46 of the liquid crystal drivers 4.

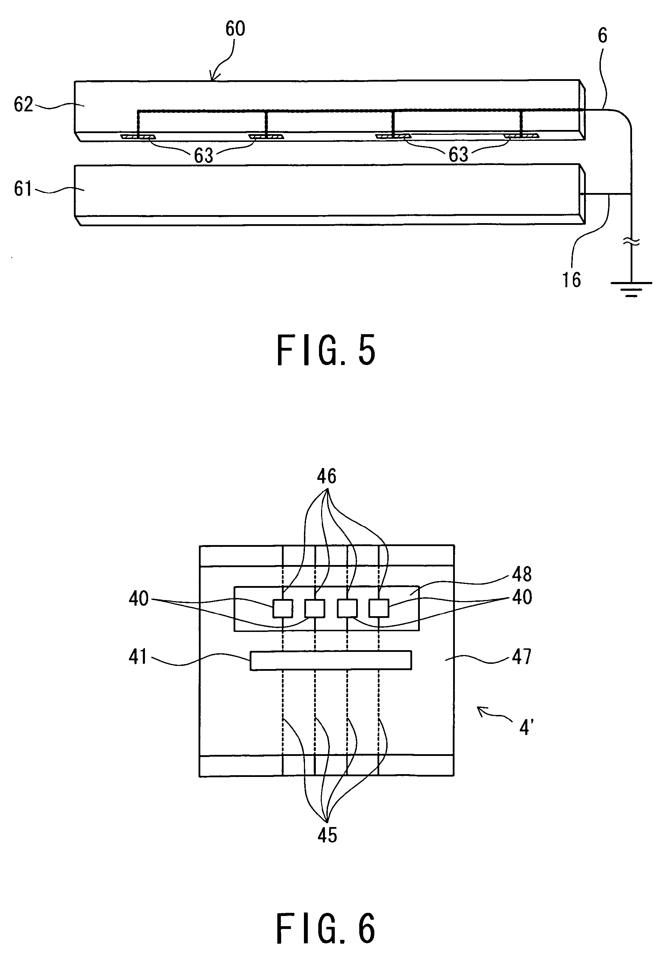

Fig. 5 is a perspective view showing the static electricity removal device 60. The pushing member 62 includes contact portions 63 arranged to be in contact with the wires 46 of the liquid crystal drivers 4. The contact portions 63 are preferably made of a nonwoven fabric of conductive fibers so as to be in contact with the wires 46 in a convincing way.

The pushing member 62 incorporates the ground lead 6 that is connected to the contact portions 63. The base 61 also incorporates a ground lead 16. The ground lead 16 is not shown in Figs. 1 and 4 for the sake of illustration.

In the static electricity removal device 60, the wires 46 of the liquid crystal drivers 4 are sandwiched between the pushing member 62 and the base 61 during the removal of static electricity. In this state, the contact portions 63 of the pushing member 62 of the static electricity removal device 60 are electrically in contact with the wires 46 of the liquid crystal drivers 4. After the static electricity removal device 60 is set in the liquid crystal module 1 as described above, the protection film 3 is detached from the surface of the liquid crystal display panel 2. For example, the protection film 3 is detached such that a corner portion thereof is pinched with the use of a given tool. The direction in which the protection film 3 is not limited specifically, and is chosen appropriately.

Static electricity produced during the detaching step passes from the liquid crystal display panel 2 through the wires 46 of the liquid crystal drivers 4, the contact portions 63 of the pushing member 62, which are in contact with the wires 46, and the ground lead 6 connected to the contact portions 63, and is then removed.

As described above, when the protection film 3 is detached from the surface of the liquid crystal display panel 2, grounding the wires 46 of the liquid crystal drivers 4 with the use of the static electricity removal device 60 allows removal of static electricity while preventing passage of static electricity through the semiconductor elements of the liquid crystal drivers 4.

In the above described method for removing static electricity of the liquid crystal module, static electricity of the liquid crystal module 1 can be removed only by sandwiching the wires 46 of the liquid crystal drivers 4 with the use of a device having a simple configuration such as the static electricity removal device 60.

In addition, in the above described method for removing static electricity of the liquid crystal module, it is unnecessary to attach and detach an FPC exclusively for static electricity or other member to and from the connectors 52 of the printed circuit boards 5. Thus, the connectors 52 of the printed circuit boards 5 can be prevented from being broken in the static electricity removal step during the detaching step of the protection film 3.

After the removal of static electricity, the opening portions 48 of the liquid crystal drivers 4 are preferably covered with an insulating material such as an insulating film (e.g., a solder resist layer).

### <Method for Producing Liquid Crystal Display Device>

The method for producing the liquid crystal display device of the preferred embodiments of the present invention includes the method (step) for removing static electricity of the liquid crystal module. The liquid crystal display device includes the liquid crystal module 1, a backlight unit arranged to project light onto the liquid crystal display panel 2 from behind, and other members. By the method for producing the liquid crystal display device of the present embodiments, the liquid crystal display device can be obtained, which includes the liquid crystal module 1 including the liquid crystal drivers 4 incorporating the semiconductor terminals 41 that are free from breakage due to static electricity.

Fig. 6 is a plan view showing a liquid crystal driver of another preferred embodiment of the present invention. A liquid crystal driver 4' shown in Fig. 6 is almost same in configuration as the liquid crystal drivers 4 shown in Fig. 4, while the liquid crystal driver 4' is different from the liquid crystal drivers 4 in that the wires 46 of the liquid crystal driver 4' each include earth pad members 40 disposed in their midways. In the liquid crystal driver 4' shown in Fig. 6, the members common to the corresponding members of the liquid crystal driver 4 are provided with reference numerals same as the corresponding members of the liquid crystal driver 4. The earth pad members 40 are provided to the wires 46 in order to increase the areas (contact areas) of portions of the wires 46 that are to be grounded. The earth pad members 40 are exposed through the opening portions 48 and separated from one another so as not to be electrically connected to one another. The shape of the earth pad members 40 in the present embodiment is square as shown in Fig. 6; however, the shape of the earth pad members 40 is not limited specifically.

Replacing the liquid crystal drivers 4 of the liquid crystal module 1 shown in Fig. 1 with the liquid crystal drivers 4' including the earth pad members 40 having the large contact areas allows easy connection of the wires 46 of the liquid crystal drivers 4' to the ground lead 6 (the contact portions 63) with the use of the static electricity removal device 60.

Described above is detaching the protection film 3 from one surface (the surface on the right side) of the liquid crystal display panel 2 in the method for removing static electricity of the liquid crystal module. Also when detaching the protection film 3 from the other surface (the surface on the back side) of the liquid crystal display panel 2, the above-described method for removing static electricity of the liquid crystal module can be used to remove static electricity. In detaching the protection film from the surface on the back side of the liquid crystal display panel 2, it is preferable to turn back the liquid crystal module 1 and detach the protection film on the back-side surface from above.

The liquid crystal drivers 4 of the liquid crystal module 1 include the opening portions 48 on one surfaces and are grounded from the side of these surfaces in the method for removing static electricity of the liquid crystal module of the above-described embodiment. In another preferred embodiment, it is preferable that opening portions are provided on both surfaces of the liquid crystal drivers 4 on the sides of the wires 46, the wires 46 are exposed through the opening portions on both the surfaces, and the exposed wires 4 6 are connected to a ground lead. In this case, it is preferable that contact portions arranged to be in contact with the wires 46 exposed from the back sides of the liquid crystal drivers 4 are provided also to the base 61 of the static electricity removal device 60.

The method for removing static electricity of the liquid crystal module of the above-described embodiments is intended to protect the semiconductor terminals 41 of the liquid crystal drivers 4 from static electricity by connecting the liquid crystal drivers (source drivers) 4 of the liquid crystal module 1 to the ground lead 6 as shown in Fig. 1. In another preferred embodiment, it is preferable to protect semiconductor terminals of the liquid crystal drivers (gate drivers) 14 shown in Fig. 1 from static electricity by connecting the liquid crystal drivers 14 to a ground lead. Usually, when the protection film 3 is detached from the surface of the liquid crystal display panel 2 of the liquid crystal module 1, the liquid crystal drivers 4 on the sides to be connected to the printed circuit boards 5 are liable to be broken by static electricity. However, it is preferable to protect the semiconductor terminals of the liquid crystal drivers 14 from static electricity in a convincing way by grounding the liquid crystal drivers 14 that are not connected to printed circuit boards. In this case, the ground lead is connected to wires at an output side of the liquid crystal drivers 14 as in the case of the liquid crystal drivers 4. A method for removing static electricity in the case of the liquid crystal drivers 14 is same as the method in the case of the liquid crystal drivers 4.

In the method for removing static electricity of the liquid crystal module 1 of the above-described embodiments, the wires 46 exposed through the opening portions 48 of the liquid crystal drivers 4 are connected to the ground lead 6 as shown in Fig.1. The opening portions 48 are surrounded by the solder resist layer 47 as shown in Figs. 2 and 3. The present invention is not limited to the configuration of the opening portions 48 surrounded by the solder resist layer 47. It is preferable that the end portions of the wires 46 on the side of the liquid crystal display panel 2 protrude (are exposed) from the solder resist layer 47. The end portions of the wires 46 are connected to the panel terminals 23 of the liquid crystal display panel 2 via the ACF 49. It is also preferable that the end portions of the wires 46 that protrude from the connection portion between the end portions and the panel terminals 23 are grounded.

## Claims

1. A method for removing static electricity of a liquid crystal module, the liquid crystal module comprising:
a liquid crystal display panel comprising a panel terminal;
a protection film that is disposed in a detachable manner on a surface of the liquid crystal display panel;
a printed circuit board comprising a data output terminal; and
a liquid crystal driver comprising:
a semiconductor element comprising an input terminal and an output terminal;
an insulating film substrate on which the semiconductor element is disposed;
a wire at an input side that is disposed on the insulating film substrate, one end of the wire being connected to the data output terminal and the other end being connected to the input terminal of the semiconductor terminal; and
a wire at an output side that is disposed on the insulating film substrate, one end of the wire being connected to the output terminal of the semiconductor terminal and the other end being connected to the panel terminal,
the method comprising the step of grounding the wire at the output side when the protection film is detached from the liquid crystal display panel.

2. The method according to claim 1, wherein the wire at the output side comprises an earth pad member disposed in a midway of the wire.

3. The method according to claim 1 or 2, wherein the liquid crystal driver further comprises a solder resist layer that covers the wires on the insulating film substrate, the solder resist layer comprising an opening portion through which the wire at the output side is exposed.

4. The method according to any one of claims 1 to 3, wherein the liquid crystal driver comprises a plurality of liquid crystal drivers, and the method comprising the step of grounding all the wires at the output sides of the liquid crystal drivers when the protection film is detached from the liquid crystal display panel.

5. The method according to any one of claims 1 to 4, wherein the liquid crystal driver comprises a source driver.

6. The method according to any one of claims 1 to 5, wherein the protection film is disposed on a polarizing plate that the liquid crystal display panel comprises.

7. A method for producing a liquid crystal display device, the method comprising the step of detaching a protection film from a liquid crystal display panel of a liquid crystal module, the liquid crystal module comprising:
the liquid crystal display panel comprising a panel terminal;
the protection film that is disposed in a detachable manner on a surface of the liquid crystal display panel;
a printed circuit board comprising a data output terminal; and
a liquid crystal driver comprising:
a semiconductor element comprising an input terminal and an output terminal;
an insulating film substrate on which the semiconductor element is disposed;
a wire at an input side that is disposed on the insulating film substrate, one end of the wire being connected to the data output terminal and the other end being connected to the input terminal of the semiconductor terminal; and
a wire at an output side that is disposed on the insulating film substrate, one end of the wire being connected to the output terminal of the semiconductor terminal and the other end being connected to the panel terminal,
wherein in the step of detaching the protection film, the wire at the output side is grounded.

8. The method according to claim 7, wherein the wire at the output side comprises an earth pad member disposed in a midway of the wire.

9. The method according to claim 7 or 8, wherein the liquid crystal driver comprises a solder resist layer that covers the wires on the insulating film substrate, the solder resist layer comprising an opening portion through which the wire at the output side is exposed.

10. The method according to any one of claims 7 to 9, wherein the liquid crystal driver comprises a plurality of liquid crystal drivers, and the method comprising the step of grounding all the wires at the output sides of the liquid crystal drivers when the protection film is detached from the liquid crystal display panel.

11. The method according to any one of claims 7 to 10, wherein the liquid crystal driver comprises a source driver.

12. The method according to any one of claims 7 to 11, wherein the protection film is disposed on a polarizing plate that the liquid crystal display panel comprises.

13. A liquid crystal module comprising:
a liquid crystal display panel comprising a panel terminal;
a protection film that is disposed in a detachable manner on a surface of the liquid crystal display panel;
a printed circuit board comprising a data output terminal; and
a liquid crystal driver comprising:
a semiconductor element comprising an input terminal and an output terminal;
an insulating film substrate on which the semiconductor element is disposed;
a wire at an input side that is disposed on the insulating film substrate, one end of the wire being connected to the data output terminal and the other end being connected to the input terminal of the semiconductor terminal; and
a wire at an output side that is disposed on the insulating film substrate, one end of the wire being connected to the output terminal of the semiconductor terminal and the other end being connected to the panel terminal,
wherein the liquid crystal driver comprises a solder resist layer that covers the wires on the insulating film substrate, the solder resist layer comprising an opening portion through which the wire at the output side is exposed.

14. The liquid crystal module according to claim 13, wherein the wire at the output side that is exposed through the opening portion comprises an earth pad member.
